# EUROPEAN PATENT APPLICATION

(11) **EP 4 707 132 A1**
(43) Date of publication of application: **11.03.2026**
(21) Application number: 24199356.7
(22) Date of filing: 09.09.2024
(51) Int. Cl.: B62D 25/00, B62D 29/00

(54) **THERMALY CONDUCTIVE CARRIER FOR BAFFLE OR REINFORCEMENT ELEMENT**

(71) Applicant: Sika Technology AG, 6340 Baar (CH)
(72) Inventor: CHMIELEWSKI, Craig, 48071 Madison Heights, MI (US); MUNZINGER, Noah, 8967 Widen (CH); WOLSCHLEGER, Leslie, 48071 Madison Heights, MI (US)
(74) Representative: Sika Patent Attorneys

(57) **Abstract**

Disclosed is a baffle and/or reinforcement element comprising a thermally expandable composition **TEC** and a carrier element, wherein the carrier element consists of a plastic material **MA** with a thermal conductivity of more than 0.6 W/(mK), determined according to ASTM D5470. Said baffle and/or reinforcement element allows for an improved expansion of the thermally expandable composition upon exposure to reduced temperatures for limited time, preferably 10 - 15 min at 140 - 150 °C.

## Description

### Technical Field

The present invention relates to a baffle and/or reinforcement element for hollow structures comprising a thermally expandable composition and a process for manufacturing such a baffle and/or reinforcement element.

### Background of the Invention

Manufactured products often contain orifices and cavities or other hollow parts that result from the manufacturing process and/or that are designed into the product for various purposes, such as weight reduction. Automotive vehicles, for example, include several such orifices and cavities throughout the vehicle, including in the vehicle's structural pillars and in the sheet metal of the vehicle doors. It is often desirable to seal such orifices and cavities so as to minimise noise, vibrations, fumes, dirt, water, humidity, and the like from passing from one area to another within the vehicle by means of sealing members or baffle elements built into the orifice or cavity. Likewise, such members or elements often fulfil an additional task of reinforcing the hollow structure of the manufactured product, e.g. automotive part, so much that it becomes more resistant to mechanical stress but still maintains the low weight advantage of the hollow structure.

Such elements used for sealing, baffling or reinforcing often consist of a carrier, made of plastic, metal, or another rigid material, and one or more layers of a thermoplastic material attached to it which is able to expand its volume when heat or another physical or chemical form of energy is applied. Using an adequate design, it is possible to insert the baffle or reinforcement element into the hollow part of the structure during the manufacturing process but also to leave the inner walls of the structure still accessible (or the cavities passable) by e.g. a liquid. For example, during the manufacture process of a vehicle, the hollow parts of a metal frame can still be largely covered by an electro-coating liquid while the baffle or reinforcement elements are already inserted, and afterwards during a heat treatment step, the expandable thermoplastic material of the baffle or reinforcement element expands to fill the cavities as intended.

The development of such baffles or reinforcement elements has led to highly advanced systems, where the expandable material is able to increase its volume by up to 1500% or more, forming a foam-like structure that fills the cavities and adhering to the walls of the structure intended to be sealed, baffled, or reinforced. Especially in automotive manufacturing, this has led to considerable weight reduction and excellent dampening of noise or vibrations in the car body.

Currently employed thermally expandable compositions contain blowing agents. Under activation conditions, such as elevated temperature, curing of the cross-linkable network takes place, while simultaneously the blowing agent decomposes and releases gases. This leads to the above-mentioned volume expansion and the formation of a stable foam which in ideal cases fills the cavity as intended and adheres to its walls. Such a system is for example disclosed in DE 10 2011 080 223 A1.

It is a current trend in the automotive industry to lower the temperature and time needed for the thermally expandable compositions to expand. It is thus desirable to obtain a baffle or reinforcement element containing a thermally expandable composition that allows for an improved expansion of the thermally expandable composition upon exposure to reduced temperatures for limited time, preferably 10 - 15 min at 140 - 150 °C.

### Summary of the Invention

It is an object of the present invention to provide a baffle or reinforcement element containing a thermally expandable composition that allows for an improved expansion of the thermally expandable composition upon exposure to reduced temperatures for limited time, preferably 10 - 15 min at 140 - 150 °C.

Surprisingly, the present invention provides a solution to that problem by providing a baffle and/or reinforcement element comprising a thermally expandable composition **TEC** and a carrier element.

The carrier element consists of a plastic material **MA** with a thermal conductivity of more than 0.6 W/(mK), determined according to ASTM D5470.

The baffle and/or reinforcement element according to the present invention is particularly suitable to be used in automotive applications. Further aspects of the present invention are subject of other independent claims. Preferred embodiments of the invention are subject of dependent claims.

### Detailed Description of the Invention

The unit term "wt.-%" means percentage by weight, based on the weight of the respective total composition, if not otherwise specified. The terms "weight" and "mass" are used interchangeably throughout this document.

The term "functionality" in connection with a molecule describes in this document the number of chemical functional groups per molecule. The term "polyfunctional" describes a molecule with more than 1 functional groups of a given type. For example, a polyfunctional acrylate with a functionality of 3 describes a molecule with 3 acrylate groups. The term "average functionality" is used if a mixture of molecules is present that differ slightly in individual functionality, but in average exhibit a given functionality, as it is sometimes the case with technical grade chemicals.

The term "equivalent" in connection with chemical functional groups describes in this document the mass amount of a substance that equals its equivalent weight. Normally, the equivalent weight is defined as the amount of substance that contains 1 mole of a defined functional group, such as an acrylate group or a peroxide function. The ordinarily skilled artisan in the field of polymer composition formulation uses such numbers to calculate appropriate ratios for active components, and such values are commonly provided by producers of functional chemicals, especially polymers. Accordingly, the "equivalent ratio" (EQ) of two substances is understood herein as the ratio of the equivalents of a first substance to the equivalents of the second substance in a given composition.

The term "radical" used in this document describes, as known to a person with ordinary skill in the art of chemistry, a chemical species with an unpaired valence electron. The cross-linking reactions involved in the curing or hardening of the polymer system of the present invention follow a radical mechanism.

Melt flow index (MFI) is determined by the ASTM D1238 standard method, using a capillary rheometer at 100 °C and a weight of 2.16 kg. MFI values describe the amount of polymer coming out of the capillary under pressure of the defined weight and at the defined temperature during a given time.

Volume changes on the thermally expandable material are determined using the DIN EN ISO 1183 method of density measurement (Archimedes principle) in deionised water in combination with sample mass determined by a precision balance.

All industry standards and norms mentioned in the document refer to the versions valid at the date of first filing, unless stated otherwise.

The carrier element can have any structure. For example, it can be solid or hollow or have a lattice-like structure. The surface of the carrier element can typically be smooth, rough or structured. The carrier element can also contribute to the structural reinforcement in addition to its function as a carrier for the thermally expandable composition **TEC.**

Preferably, the carrier element has a weight of more than 0.3 kg, preferably more than 0.6 kg, most preferably more than 1 kg. Especially such larger carrier elements with a higher mass take up significantly more heat energy during a heating process making it more difficult for the thermally expandable composition **TEC** to expand. Hence the current invention is especially suitable for such larger carrier elements.

It is further preferred if the carrier element has a maximal extension along its longitudinal axis of more than 0.2 meter, preferably more than 0.4 meter, most preferably more than 0.6 meter.

Preferably, the thermally expandable composition **TEC** is in direct contact with the carrier element. Preferably, 10 - 100 percent, more preferably 15 - 60 percent, most preferably 20 - 40 percent of the surface of the carrier element is in direct contact with the thermally expandable composition **TEC**. It is further preferable, if 50 - 100 percent, more preferably 75 - 100 percent, most preferably 90 - 100 percent of the surface of thermally expandable composition **TEC**, that is in contact with any other material than the surrounding air, is in direct contact with the carrier element.

The carrier element consists of a plastic material **MA** with a thermal conductivity of more than 0.6 W/(mK), determined according to ASTM D5470.

Preferably, the plastic material **MA** has a thermal conductivity of more than 0.8 W/(mK), preferably more than 1.0 W/(mK), more preferably more than 1.1 W/(mK), determined according to ASTM D5470. This is advantageous with respect to a faster and more efficient expansion of the thermally expandable composition **TEC** upon exposure to heat, preferably 5 - 20 min at a temperature between 140 °C - 150 °C. This can be seen, for example, in the comparison of R1-R4 with E1-E8 in table 4. It is noteworthy that the substrate size of CA2 (E2, E4, E6 and E8) is larger than the substrate size of CA1 (150 mm vs 120 mm in length). It is believed that the additional mass needed to heat up was responsible for the lower expansion rates of CA2 using RF1, BF1 and BF2 compared to CA1 despite CA2 having a higher thermal conductivity.

It is further advantageous, if the plastic material **MA** has a specific heat capacity of less than 2500 J/(kgK), preferably less than 2250 J/(kgK), more preferably less than 2000 J/(kgK), determined according to ISO 11357-4. Most preferably, the plastic material **MA** has a specific heat capacity of 1000 - 2000 J/(kgK). This is advantageous with respect to a faster and more efficient expansion of the thermally expandable composition **TEC** upon exposure to heat, preferably 5 - 20 min at a temperature between 140 °C - 150 °C.

Preferably, the plastic material **MA** has a tensile modulus @ 23 °C (ISO 527) of 1 - 20 GPa, more preferably 12.5 - 18 GPa, most preferably 14 - 16 GPa, and/or, preferably and;
a tensile strength @ 23 °C (ISO 527) of 30 - 300 MPa, more preferably 75 - 250 MPa, most preferably 150 - 200 MPa, and/or, preferably and;
a charpy notched impact strength @ 23°C (ISO 179) of 2 - 25 kJ/m², more preferably 3 - 20 kJ/m², most preferably 10 - 15 kJ/m².

This is advantageous with respect to improved mechanical performance, especially if the element according to the invention is reinforcement element.

It is further advantageous, if the plastic material **MA** has a density determined according to DIN EN ISO 1183 of 0.8 - 1.8 kg/m³, preferably 1.0 - 1.7 kg/m³, more preferably 1.2 - 1.65 kg/m³.

It is further preferred, if the plastic material **MA** comprises fibers, preferably selected from glass fibers, carbon fibers and aramid fibers, preferably selected from glass fibers and carbon fibers.

Preferably, the amount of fibers, based on the total weight of the material **MA**, is 20 - 50 wt.-%, more preferably 30 - 40 wt.-%, most preferably 32.5 - 37.5 wt.-%. This is advantageous with respect to improved mechanical performance, especially if the element according to the invention is a reinforcement element and the thermally expandable composition **TEC** is a thermally expandable composition **TEC** as described in claim 10 and/or claim 14. In case the element according to the invention is a baffle element and the thermally expandable composition **TEC** is a thermally expandable composition **TEC** as described in claim 11 and/or claim 13, it might be advantageous if the material **MA** is free of fibers.

Preferably, the plastic material **MA** comprises a thermally conductive filler. Preferably, the thermally conductive filler is selected from the group consisting of graphite; carbon black; carbon nanotubes; metallic powders, preferably aluminum powder, copper powder, bronze powder and brass powder; metal oxide, preferably zinc oxide, magnesium oxide, beryllium oxide, zirconium oxide; preferably the conductive filler is selected from graphite and metallic powders.

It is advantageous, if the amount of said thermally conductive filler is 2 - 85 wt.-%, more preferably 3 - 50 wt.-%, most preferably 5 - 35 wt.-%, based on the total weight of the plastic material **MA**.

If the element according to the invention is a reinforcement element and the thermally expandable composition **TEC** is a thermally expandable composition **TEC** as described in claim 10 and/or claim 14, it might be advantageous if the amount of thermally conductive filler is 5 - 15 wt.-%, based on the total weight of the plastic material **MA**.

In case the element according to the invention is a baffle element and the thermally expandable composition **TEC** is a thermally expandable composition **TEC** as described in claim 11 and/or claim 13, it might be advantageous if the amount of thermally conductive filler is 10 - 35 wt.-%, based on the total weight of the plastic material **MA.**

It is further preferred if the plastic material **MA** comprises a thermoplastic material as a matrix. Preferably, the plastic material **MA** comprises a polymer selected from the group consisting of polyamides, polyesters, especially polyetylene terephthalates and polybutylene terephthalates, polyketones, polyphenylene ethers, polysulfones and polyethersulfones, preferably polyamides.

It is advantageous, if the amount of said polymer is 30 - 90 wt.-%, more preferably 40 - 85 wt.-%, most preferably 50 - 80 wt.-%, based on the total weight of the plastic material **MA.**

If the element according to the invention is a reinforcement element and the thermally expandable composition **TEC** is a thermally expandable composition **TEC** as described in claim 10 and/or claim 14, it might be advantageous if the amount of said polymer is 45 - 65 wt.-%, based on the total weight of the plastic material **MA.**

In case the element according to the invention is a baffle element and the thermally expandable composition **TEC** is a thermally expandable composition **TEC** as described in claim 11 and/or claim 13, it might be advantageous if the amount of said polymer is 65 - 90 wt.-%, based on the total weight of the plastic material **MA**.

The baffle and/or reinforcement element comprises a thermally expandable composition **TEC**. Preferably, said thermally expandable composition **TEC** comprises at least one blowing agent **BA**, preferably selected from azodicarbonamide and 4,4'-oxybis (benzenesulphonylhydrazide).

Preferably, the at least one blowing agent **BA** is present in an amount of 0.25 -15 wt.-%, based on the total weight of the thermally expandable composition **TEC**

A suitable blowing agent may be a chemical or physical blowing agent. Preferably, the at least one blowing agent **BA** is a chemical blowing agent.

The at least one physical or chemical blowing agent **BA** preferably has an activation temperature from 120 °C to 220 °C, preferably from 140 °C to 200 °C.

Suitable chemical blowing agents include, but are not limited to, azo compounds, hydrazides, nitroso compounds, carbamates, carbazides, bicarbonates, polycarboxylic acids, and salts of polycarboxylic acids.

According to one or more embodiments, the at least one blowing agent **BA** is selected from the group consisting of azodicarbonamide, azoisobutytronitrile, azocyclohexyl nitrile, dinitrosopentamethylene tetramine, azodiamino benzene, benzene-1,3-sulfonyl hydrazide, calcium azide, 4,4'-diphenyldisulphonyl azide, p-toluenesulphonyl hydrazide, p-toluenesulphonyl semicarbazide, 4,4'-oxybis(benzenesulphonylhydrazide), trihydrazino triazine, and N,N'-dimethyl-N,N'-dinitrosoterephthalamide, and combinations thereof, preferably azodicarbonamide or 4,4'-oxybis(benzenesulphonylhydrazide.

Suitable physical blowing agents further include expandable microspheres, consisting of a thermoplastic shell filled with thermally expandable fluids or gases. Suitable expandable microspheres are commercially available, for example, under the trademark of Expancel^{®} microspheres (from AkzoNobel).

Preferably, the thermally expandable composition **TEC** is selected from the group consisting of epoxy resin compositions, polyurethane compositions and compositions containing at least one polymer **P** that is cross-linkable by peroxide.

In a preferred aspect of the invention, the thermally expandable composition **TEC** is a composition containing at least one polymer **P** that is cross-linkable by peroxide. This selection is especially preferred if the element according to the invention is a baffle element.

As said polymer **P** principally all thermoplastic polymers or thermoplastic elastomers capable of cross-linking reactions with peroxides are suitable. The artisan skilled in the field describes polymers as "cross-linkable by peroxide" if these polymers contain functional groups, e.g. C-C double bonds, which release hydrogen atoms under influence of a radical starter, e.g. a peroxide, from their backbone or side chain, such that a radical remains that is able to radically attack other polymer chains in a subsequent step, leading to a radical chain reaction cross-linking process and ultimately to a polymer network.

Suitable polymers **P** include, for example, styrene-butadiene copolymers, styreneisoprene copolymers, ethylene-vinyl acetate copolymers, ethylene-methacrylate copolymers, ethylene-ethyl acrylate copolymers, ethylene butyl acrylate copolymers, ethylene-(meth)acrylic acid copolymers, ethylene-2-ethylhexyl acrylate copolymers, ethylene-acrylic ester copolymers, polyolefinc block copolymers, and polyolefins such as polyethylene or polypropylene.

The copolymers, meaning polymers made from more than one type of monomer, can be block type copolymers or random copolymers.

Polymers **P** can also be further functionalised, meaning they can contain further functional groups such as hydroxyl, carboxy, anhydride, acrylate, and/or glycidylmethacrylate groups.

Preferred is one or more polymer **P** with an average melt flow index (MFI) of between 1 and 200 g/10 min, preferably between 10 and 100 g/10 min, more preferably between 25 and 75 g/10 min, most preferably between 35 and 55 g/10 min.

The polymer **P** preferably comprises ethylene-vinyl acetate (EVA). More preferably more than 70 wt-%, more than 80 wt-%, more than 90 wt-%, more than 95 wt-%, more than 99 wt-%, of the Polymer **P** consists of ethylene-vinyl acetate (EVA), based on the total amount of the Polymer **P.**

In this case, the content of vinyl acetate monomers in EVA should be between 8 and 45 wt.-%, preferably between 15 and 30 wt.-%, based on the total weight of the EVA polymer.

In cases where more than one type of polymer is used, the individual MFI combine to an average MFI of the used polymer mixture, which has to be determined according to ASTM D1238.

The thermally expandable composition preferably contains said at least one polymer P with an amount of between 30 and 80 wt.-%, preferably between 40 and 70 wt.-%, more preferably between 40 and 60 wt.-%, based on the weight of the total composition.

Preferred EVA polymers include, e.g., Elvax^{®} 150, Elvax^{®} 240A, Elvax^{®} 260A, Elvax^{®} 420A (all by DuPont), or the corresponding Evatane^{®} copolymers (by Arkema).

A second preferred component of the thermally expandable composition containing the polymer **P** is at least one acrylate **A**,

Preferably, the acrylate **A** is present with an amount of between 0.1 and 5 wt.-%, preferably between 0.2 and 2 wt.-%, more preferably between 0.3 and 0.75 wt.-%, based on the total weight of the composition.

Acrylate **A** preferably has a molecular weight of less than 2'500 g/mol, more preferably less than 1'000 g/mol.

Acrylate **A** preferably exhibits an acrylate functionality of at least 2 or 3, preferably between 2 and 6, more preferably between 3 and 5, most preferably 5. More preferably, the acrylate **A** comprises a polyfunctional acrylate with an acrylate functionality of at least 2 or 3, preferably between 2 and 6, more preferably between 3 and 5, most preferably 5, in an amount of more than 70 wt-%, more than 80 wt-%, more than 90 wt-%, more than 95 wt-%, more than 99 wt-%, based on the total amount of the Acrylate **A**.

Although polymer **P** (described above) can comprise acrylate functions, it is beneficial for the inventive composition that these two components are not the same chemical compound. In comparison, acrylate A is generally smaller than polymer P in terms of molecular weight and acts as cross-linker for polymer **P** also. Only using one of the two components would either lead to poor mechanical properties in the final product or would inhibit the formation of a stable foam structure during and after expansion.

Preferred acrylates A with a functionality of 2 include ethylene glycol dimethacrylate, diethylene glycol dimethacrylate, triethylene glycol dimethacrylate, triethylene glycol diacrylate, tripropylene glycol dimethacrylate, 1,3-butanediol dimethacrylate, 1,4-butanediol dimethacrylate, 1,10-dodecanediol dimethacrylate, 1,6-hexandieol dimethacrylate, neopentylglycol dimethacrylate, and polybutylene glycol dimethacrylate.

Preferred acrylates A with a functionality of 3 or higher include glycerol triacrylate, pentaerythritol triacrylate, pentaerythritol trimethacrylate, trimethylolpropane triacrylate, trimethylolpropane trimethacrylate, tetramethylolmethane tetraacrylate, Di-(trimethylolpropane) tetraacrylate, pentraerythritol tetraacrylate, dipentaerythritol pentaacrylate, dipentaerythritol hexaacrylate, tri(2-methacryloxyethyl) trimellitate, tri(2-acryloxyethyl) isocyanurate, as well as their ethoxylated or propoxylated derivates.

Especially preferred acrylates A exhibit a functionality of 5, such as dipentaerythritol pentaacrylate.

Further preferred acrylates include highly functional, hyperbranched acrylates with functionalities of between 6 and 16, or higher. Examples of such preferred acrylates include hyperbranched polyester-polyacrylates, for example Sartomer^{®} CN2303 and Sartomer^{®} CN2305, both by Arkema.

A third preferred component of the thermally expandable composition containing the polymer **P** is at least one peroxide **PE.**

The thermally expandable composition containing the polymer **P** preferably contains said peroxide **PE** in an amount of between 2.5 and 5 wt.-%, preferably between 2.8 and 4.8 wt.-%, based on the total weight of the composition.

Preferred peroxides include dicumyl peroxide, available for example under the trade names Perkadox^{®} BC-40B-PD by Akzo Nobel or Peroxan^{®} DC-40 PK by Pergan and/or di(t-butylperoxyisopropyl) benzene, available for example under the trade names Perkadox^{®} 14-40B-PD by Akzo Nobel or Peroxan^{®} BIB-40 P by Pergan, wherein di(t-butylperoxyisopropyl) benzene is especially preferred.

The fourth preferred component of the composition containing the polymer **P** is a blowing agent **BA** as mentioned above.

Preferably, the blowing agent **BA** is included in the composition with an amount of between 3 and 15 wt.-%, preferably between 5 and 10 wt.-%, more preferably between 7 and 9.5 wt.-%, based on the total weight of the composition.

Preferably, the composition containing the polymer **P** comprises:
- at least one polymer **P**, cross-linkable by peroxide, preferably between 30 and 80 wt.-%, based on the total weight of the composition, and;
- preferably at least one acrylate **A**, preferably between 0.1 and 5 wt.-%, based on the total weight of the composition, and;
- at least one peroxide **PE** and;
- at least one blowing agent **BA**, preferably selected from azodicarbonamide and 4,4'-oxybis(benzenesulphonylhydrazide, preferably between 3 and 15 wt.-%, based on the total weight of the composition.

Apart from said ingredients, the composition containing the polymer **P** may contain other components commonly used in such compositions and known to the ordinarily skilled artisan in the field. These include, for example, fillers, colorants, dispersion aids or homogenizers, adhesion promoters, antioxidants, stabilizers, and the like.

In another preferred aspect of the invention, the thermally expandable composition **TEC** is an epoxy resin composition, more preferably a thermosetting one-component epoxy resin composition. This selection is especially preferred if the element according to the invention is a reinforcement element.

Most preferably, the one-component thermosetting epoxy resin composition comprises:
- at least one epoxy resin A having on average more than one epoxide group per molecule, preferably a solid epoxy resin, the fraction of the epoxy resin A preferably being from 30 - 90 wt.-%, based on the total weight of the one-component thermosetting epoxy resin composition; and
- at least one latent hardener B for epoxy resins; and
- preferably at least one accelerator C for epoxy resins; and
- at least one toughness improver D, the fraction of toughness improver D preferably being from 1 - 10 wt.-%, based on the total weight of the one-component thermosetting epoxy resin composition, and;
- at least one blowing agent **BA**, preferably selected from azodicarbonamide and 4,4'-oxybis(benzenesulphonylhydrazide), preferably between 0.25 and 5 wt.-%, based on the total weight of the composition.

The thermosetting one-component epoxy resin composition comprises at least one epoxy resin **A** having on average more than one epoxide group per molecule. Preferably, the at least one epoxy resin **A** having on average more than one epoxide group per molecule is a solid epoxy resin.

The term "solid epoxy resin" is very familiar to the person skilled in the epoxide art and is used in contrast to "liquid epoxy resins". The glass transition temperature of solid resins is above room temperature, meaning that at room temperature they can be comminuted into pourable powders. It is preferred if more than 70 wt.-%, more preferred more than 80 wt.-%, more than 90 wt.-%, more than 95 wt.-%, more than 98 wt.-%, of the epoxy resin **A** is a solid epoxy resin.

Preferred epoxy resins have the formula (I)

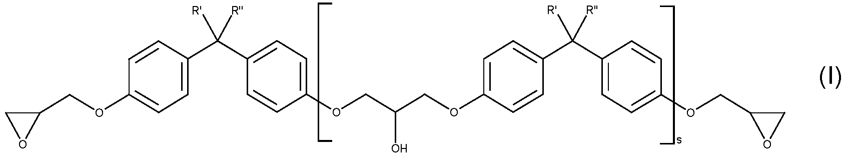

In this formula, the substituents R' and R" independently of one another are either H or CH₃.

In solid epoxy resins, the index s has a value of > 1.5, more particularly from 2 to 12.

Solid epoxy resins of this kind are available commercially, for example, from Dow or Huntsman or Hexion.

Compounds of the formula (I) having an index s of 1 to 1.5 are referred to by the person skilled in the art as semi-solid epoxy resins. For the purposes of the present invention, they are considered likewise to be solid resins. Preferred solid epoxy resins, however, are epoxy resins in the narrower sense, in other words where the index s has a value of > 1.5.

In the case of liquid epoxy resins, the index s has a value of less than 1. Preferably s has a value of less than 0.2.

The resins in question are therefore preferably diglycidyl ethers of bisphenol A (DGEBA), of bisphenol F and also of bisphenol A/F. Liquid resins of these kinds are available for example as Araldite^{®} GY 250, Araldite^{®} PY 304, Araldite^{®} GY 282 (Huntsman) or D. E. R. ^{™} 331 or D. E. R. ^{™} 330 (Dow) or Epikote 828 (Hexion).

Of further suitability as epoxy resin **A** are what are called epoxy novolacs. These compounds have, in particular, the following formula: 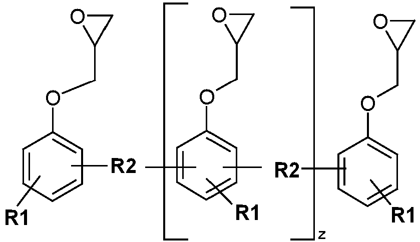 where **R2** = 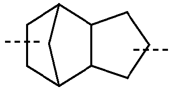 or CH₂, **R1** = H or methyl and z = 0 to 7.

More particularly these are phenol-epoxy or cresol-epoxy novolacs (**R2** = CH₂).

Epoxy resins of these kinds are available commercially under the tradename EPN or ECN and also Tactix^{®} from Huntsman, or within the product series D.E.N. ^{™} from Dow Chemical.

The epoxy resin **A** is preferably a solid epoxy resin of the formula (I).

The fraction of the epoxy resin **A** is preferably from 30 - 90 wt.-%, based on the total weight of the one-component thermosetting epoxy resin composition, preferably from 40 - 70 wt.-%, most preferably 50 - 60 wt.-%.

The thermosetting one-component epoxy resin composition further comprises at least one latent hardener **B** for epoxy resins. Latent hardeners are substantially inert at room temperature and are activated by elevated temperature, typically at temperatures of 70°C or more, thereby initiating the curing reaction. The customary latent hardeners for epoxy resins can be used. Preference is given to a latent epoxy resin hardener **B** containing nitrogen.

The latent hardener **B** is preferably selected from dicyandiamide, guanamines, guanidines, aminoguanidines and derivatives thereof, substituted ureas, imidazoles and amine complexes, preferably dicyandiamide.

The latent hardener **B** is preferably used in a stoichiometric amount based on the epoxy groups in the composition. The molar ratio of the epoxy groups to the active hydrogen of the latent hardener **B** is preferably 0.8 to 1.2, in particular 0.9 to 1.1, preferably 0.95 to 1.05.

The fraction of the latent hardener **B** is preferably 0.5 to 12 wt%, more preferably 1 to 8 wt%, more particularly 2-6 wt%, based on the total weight of the epoxy resin composition.

The thermosetting one-component epoxy resin composition preferably further comprises at least one accelerator **C** for epoxy resins.

Such accelerating curing agents are preferably substituted ureas, for example 3-(3-chloro-4-methylphenyl)-1,1-dimethylurea (chlortoluron) or phenyldimethylureas, especially p-chlorophenyl-N,N-dimethylurea (monuron), 3-phenyl-1,1-dimethylurea (fenuron) or 3,4-dichlorophenyl-N,N-dimethylurea (diuron). In addition, it is possible to use compounds from the class of the imidazoles, such as 2-isopropylimidazole or 2-hydroxy-N-(2-(2-(2-hydroxyphenyl)-4,5-dihydroimidazol-1-yl)ethyl)benzamide, imidazolines, trihalide complexes, preferably BF₃ complexes, blocked amines and encapsulated amines.

Preferably, the accelerator **C** for epoxy resins is selected from the list consisting of substituted ureas, imidazoles, imidazolines and blocked amines, preferably substituted ureas.

The one-component thermosetting epoxy resin composition comprises at least one toughness improver **D.** The toughness improvers **D** may be solid or liquid.

More particularly the toughness improver **D** is selected from the group consisting of terminally blocked polyurethane polymers **D1**, liquid rubbers **D2** and core-shell polymers **D3.** With preference the additional toughness improver **D** is selected from the group consisting of terminally blocked polyurethane polymers **D1** and liquid rubbers **D2**, most preferably liquid rubbers **D2**.

Preferred liquid rubbers **D2** are carboxyl group (e.g., carboxylic acid groups) containing acrylonitrile/butadiene rubber **ABR** and reaction products thereof with polyepoxides and/or polyphenols.

Such carboxyl group containing acrylonitrile/butadiene rubbers **ABR** may also include pendant carboxy or carboxyl groups.

The carboxyl group containing acrylonitrile/butadiene rubbers **ABR** preferably have a carboxyl content of 0.005 equivalents per hundred rubber (EPHR) to 0.4 EPHR, more preferably from 0.01 EPHR to 0.2 EPHR and even more preferably from 0.05 EPHR to 0.1 EPHR.

For the carboxyl group containing acrylonitrile/butadiene rubbers **ABR,** the carboxylic groups are preferably provided by a termonomer such as methacrylic acid. The carboxyl groups containing acrylonitrile/butadiene rubbers **ABR** preferably are acrylonitrile/butadiene/methacrylic acid rubbers.

Particularly preferred carboxyl group containing acrylonitrile/butadiene rubbers **ABR** are available from Nippon Zeon under the trade name Hycar, now available under the trade name NIPOL.

The carboxyl group containing acrylonitrile/butadiene rubbers **ABR** preferably include from 10% - 50% by weight nitrile, more preferably 20% - 40% by weight nitrile and even more preferably 25% - 35% by weight nitrile.

More preferably, the liquid rubbers **D2** are epoxy resin modified acrylonitrile-butadiene copolymers. For example, they can be produced by reacting carboxy- or epoxy-terminated acrylonitrile-butadiene copolymers, also known as liquid rubbers, with polyepoxides and/or polyphenols. Preferably, the at least one epoxy resin modified acrylonitrile-butadiene copolymer is obtained by reacting one or more carboxyl-terminated butadiene-acrylonitrile copolymers (CTBN) with one or more solid epoxy resins of the formula (I) and/or one or more liquid epoxy resin of the formula (I) and/or one or more novolac type epoxy resin.

Suitable epoxy resin modified acrylonitrile-butadiene copolymers are commercially available, for example, under the trade name of Struktol^{®} from Schill & Seilacher Gruppe, Germany, such as Struktol^{®} 3604, Struktol^{®} 3606, Struktol^{®} 3611, Struktol^{®} 3614, Struktol^{®} 3654, and Struktol^{®} 3656. Suitable epoxy resin modified acrylonitrile-butadiene copolymers also include the mixtures of polymers disclosed in US patent 9,796,809 B2 as "impact strength improving agents for epoxy resin compositions".

The fraction of toughness improver **D** is preferably from 1 - 10 wt%, more preferably 2.5 -7.5 wt%, based on the total weight of the epoxy resin composition.

In one preferred embodiment, the one-component thermosetting epoxy resin composition further comprises at least one filler **F**. Preference here is given to mica, talc, kaolin, wollastonite, feldspar, syenite, chlorite, bentonite, montmorillonite, calcium carbonate (precipitated or ground), dolomite, quartz, silicas (fumed or precipitated), cristobalite, calcium oxide, aluminium hydroxide, magnesium oxide, hollow ceramic beads, hollow glass beads, hollow organic beads, glass beads, glass fibres and colour pigments. Particularly preferred are fillers selected from the group consisting of calcium carbonate, calcium oxide, talc, glass fibres, hollow glass beads and fumed silicas, more preferably talc, glass fibres, hollow glass beads, calcium carbonate and fumed silicas.

The total fraction of the overall filler **F** is advantageously 5-50 weight-%, preferably 15-45 weight-%, more preferably 20-40 weight-%, based on the total weight of the epoxy resin composition.

The one-component thermosetting epoxy resin composition may comprise further constituents, especially catalysts, thixotropic agents, plasticizers, solvents, dyes and pigments, corrosion inhibitors, defoamers and adhesion promoters.

The proportion of the blowing agent **BA** is advantageously 0.25-5% by weight, preferably 0.5-3% by weight, in particular 1-2% by weight, based on the total weight of the one-component thermosetting epoxy resin composition.

It is further preferred, if the one-component thermosetting epoxy resin composition show the following adhesion and mechanical properties:
- Tensile strength: ≥3 MPa, preferably ≥4 MPa, more preferably ≥5 MPa; and/or, preferably and
- Modulus: ≥400 MPa, preferably ≥500 MPa, more preferably ≥600 MPa; and/or, preferably and
- Elongation at break: 0.5 - 2 %, preferably 0.75 - 1.5 %, more preferably 1 - 1.25 %.

In one aspect of the invention, it is preferred if the thermally expandable composition **TEC** has an expansion rate of 60% - 600%, preferably 100% - 500%, more preferably 150% - 300%. This selection is especially preferred if the element according to the invention is a reinforcement element and/or the thermally expandable composition **TEC** is an above mentioned one-component thermosetting epoxy resin composition.

In one aspect of the invention, it is preferred if the thermally expandable composition **TEC** has an expansion rate of 800% - 4000%, preferably 900% - 3000%, more preferably 1000% - 2500%. This selection is especially preferred if the element according to the invention is a baffle element and/or the thermally expandable composition **TEC** is an above mentioned composition comprising at least one polymer **P**, cross-linkable by peroxide.

The above-mentioned expansion rate is preferably determined by heating the thermally expandable composition **TEC** for 30 minutes at 180 °C and determining the expansion rate by DIN EN ISO 1183.

The thermally expandable composition **TEC** can be manufactured by mixing the components in any suitable mixing apparatus, e.g. in a dispersion mixer, planetary mixer, twin mixer, continuous mixer, extruder, or dual screw extruder.

It may be advantageous to heat the components before or during mixing, either by applying external heat sources or by friction generated by the mixing process itself, in order to facilitate processing of the components into a homogeneous mixture by decreasing viscosities and/or melting of individual components. However, care has to be taken, e.g. by temperature monitoring and use of cooling devices where appropriate, not to exceed the activation temperatures of the blowing agent **BA**. The final composition is preferably essentially solid at room temperature (23 °C), meaning that it does not visibly deform at this temperature just by means of gravity during at least 24 h.

After mixing, the resulting composition may be shaped into its desired form by, e.g., extruding, blow-moulding, pelleting, injection moulding, compression moulding, punching or stamping or any other suitable process.

The expansion of the thermally expandable composition **TEC** is triggered by heat. Preferably, the activation temperatures for the thermally expandable composition are in the range of 130 °C to 250 °C, preferably 150 °C to 200 °C, and require a dwell time of between 10 and 90 min, preferably between 15 and 60 min.

The baffle and/or reinforcement element comprising the carrier element and the thermally expandable composition **TEC** is preferably produced by injection molding.

Preferably, a two-component injection molding process is used. First, a first component, in this case the carrier element, is injected. After this first component has solidified, the cavity in the mold is enlarged or adapted, or the molded part is placed in a new mold, and a second component, in this case the thermally expandable composition **TEC**, is molded onto the first component with a second injection unit.

Furthermore, the invention comprises the use of a baffle and/or reinforcement element, as described above, for baffling and reinforcing cavities in structural components. Structural components of this type are preferably used in bodies and / or frames of means of transport and transportation, in particular of vehicles on water or on land or of aircraft. The invention preferably includes the use of a baffle and/or reinforcement element according to the invention in bodies or frames of automobiles (in particular A, B, C or D pillars) trucks, railroad cars, boats, ships, helicopters and airplanes, mostly preferably in automobiles.

A further aspect of the present invention therefore relates to a method for baffling and/or reinforcing structural components comprising the steps
i) placing the baffle and/or reinforcement element in a cavity according to the previous description;
ii) heating the baffle and/or reinforcement element to a temperature from 120 °C to 220 °C, preferably from 140 °C to 200 °C, preferably for 10 to 60 min.

Preferably, step i) takes place before step ii).

Hence another aspect of the present invention is the use of a carrier element, wherein the carrier element consists of a plastic material **MA** with a thermal conductivity of more than 0.6 W/(mK), determined according to ASTM D5470, as described before, for increasing the volume expansion of a thermally expandable composition **TEC** as mentioned before in direct contact with the carrier element.

This is compared to a carrier element consisting of a plastic material **MA** with a thermal conductivity of less than 0.6 W/(mK). The volume expansion is determined after curing the thermally expandable composition **TEC** at a temperature of 140 - 150 °C for 5 - 20 min.

The volume expansion is preferably determined by DIN EN ISO 1183. More preferably, a sample of the thermally expandable composition **TEC** with the dimension 25 mm x 25 mm x 3 mm is placed on a sample of the plastic material **MA** with the dimension 120 mm x 150 mm x 3 mm and the received specimen is exposed the indicated temperature for the indicated time. The volume expansion is then determined by DIN EN ISO 1183.

In one preferred aspect, the volume expansion is determined after curing the thermally expandable composition **TEC**, preferably a one-component thermosetting epoxy resin composition as mentioned above, at a temperature of 140 °C for 7.5 min, and the volume expansion is more than 30 %, preferably more than 50 %, compared to a carrier element consisting of a plastic material **MA** with a thermal conductivity of less than 0.6 W/(mK); and/or, preferably and, the volume expansion is determined after curing the thermally expandable composition **TEC** at a temperature of 140 °C for 10 min, and the volume expansion is more than 10 %, preferably more than 20 %, compared to a carrier element consisting of a plastic material **MA** with a thermal conductivity of less than 0.6 W/(mK).

In another preferred aspect, the volume expansion is determined after curing the thermally expandable composition **TEC**, preferably a composition comprising at least one polymer **P**, cross-linkable by peroxide as mentioned above, at a temperature of 150 °C for 10 min, preferably as described in the description, and the volume expansion is more than 300 %, preferably more than 450 %, more preferably more than 700 %, compared to a carrier element consisting of a plastic material **MA** with a thermal conductivity of less than 0.6 W/(mK); and/or, preferably and, wherein the volume expansion is determined after curing the thermally expandable composition **TEC** at a temperature of 140 °C for 15 min, preferably as described in the description, and the volume expansion is more than 150 %, preferably more than 200 %, more preferably more than 230 %, compared to a carrier element consisting of a plastic material **MA** with a thermal conductivity of less than 0.6 W/(mK).

### Examples

Raw materials and test methods used for the testing of the respective properties in the examples were as follows:

### Carrier materials CAR, CA1 and CA2

**Table 1**

| Carier material | |
|---|---|
| CAR | Reference material, Polyamide 66 containing 35 wt.-% glass fibres and not containing thermal conductive filler, thermal conductivity k 0.42 W/(mK), heat capacity Cₚ 2060 J/(kgK), density (ISO 1183) 1.43 kg/m³, tensile modulus @ 23 °C (ISO 527) 11.5 GPa, tensile strength @ 23 °C (ISO 527) 210 MPa, charpy notched impact strength @ 23°C (ISO 179) 13 kJ/m² |
| CA1 | Material according to invention, Polyamide 66 containing carbon fibres and containing in addition thermal conductive filler (graphite), thermal conductivity 1.19 W/(mK), heat capacity 1910 J/(kgK), density (ISO 1183) 1.53 kg/m³, GPa, tensile strength @ 23 °C (ISO 527) 81 MPa |
| CA2 | Material according to invention, Polyamide 66 containing glass fibres and containing in addition thermal conductive filler (graphite), thermal conductivity 1.75 W/(mK), heat capacity 1790 J/(kgK), density (ISO 1183) 1.62 kg/m³, tensile modulus @ 23 °C (ISO 527) 14.7 GPa, tensile strength @ 23 °C (ISO 527) 65 MPa, charpy notched impact strength @ 23°C (ISO 179) 3 kJ/m² |

### Reinforcing compositions 1 and 2 (RF1 and RF2)

**Table 2**

| Raw materials | RF1 | RF2 |
|---|---|---|
| Solid epoxy resin, (bisphenol A diglycidyl ether based), Dow | 50.5 | 50.5 |
| Nipol 1472 HV from Nippon Zeon, Mooney Viscosity (ML 1+4 at 100°C) of 41 MU, Carboxyl Content 0.07-0.08 EPHR, 27 % by weight nitrile. | 12.5 | 12.5 |
| Chopped glass fibers, Lanxess | 10 | 10 |
| Fumed Silica, Wacker | 1.9 | 1.9 |
| Clay mineral composed of hydrated magnesium silicate | 18.6 | 18.1 |
| Luwax, ethylene homopolymer wax, BTC Europe | 4.1 | 4.1 |
| Dicyandiamide | 1.1 | 1.1 |
| Accelerator | 0.3 | 0.3 |
| Chemical blowing agent, OBSH | 1.0 | 1.5 |
| Total (wt.-%) | 100 | 100 |

### Preparation of the compositions

According to the information in table 2, the compositions RF1 and RF 2 were produced. The amounts in Table 2 are in parts by weight. The raw materials used were mixed with a tumble mixer for 10 min.

The mixtures were then introduced into a twin-screw extruder (Dr. Collin ZK 25 T SCD15) and compounded at a throughput of 2.5 kg per hour. The discharge took place through a 1-hole nozzle (3mm) on a conveyor belt. The strand obtained was cooled with forced air and then granulated using the Dr. Collin granulator integrated in the system. The granules obtained were then processed into 3 mm thick sheets using a Krauss-Maffei 110t injection molding machine.

### Baffling compositions 1 and 2 (BF1 and BF2)

**Table 3**

| Raw materials | BF1 | BF2 |
|---|---|---|
| EVA with 18 wt.-% vinyl acetate monomer and MFI of 150 g/10 min (ATSM D1238) | 30 | 30 |
| EVA with 28 wt.-% vinyl acetate monomer and MFI of 6 g/10 min (ATSM D1238) | 16 | 16 |
| Di-(2-tert.-butyl-peroxyisopropyl)-benzene (40 wt.-%) on calcium carbonate | 2.5 | 2.5 |
| 1,1-Di-(tert.-butylperoxy)-3,3,5-trimethylcyclohexane (40 wt.-%) on calcium carbonate | 1.3 | 1.3 |
| tetrakis(methylene(3,5-di-tert.-butyl-4-hydroxyhydrocinnamate))methane | 0.3 | 0.3 |
| Azodicarbonamide | 5 | 10 |
| Urea accelerator | 3 | 3 |
| Zinc oxide | 3 | 3 |
| Ethylene-glycidyl methacrylate copolymer (8 wt.-% glycidyl methacrylate) with MFI of 5 g/10 min (ASTM D1238) | 12 | 12 |
| Aromatically modified C5 hydrocarbon resin | 13 | 13 |
| Dipentaerythritol pentaacrylate | 2 | 2 |
| Calcium carbonate | 11.9 | 6.9 |
| Total (wt.-%) | 100 | 100 |

### Preparation of the compositions

According to the information in table 3, the compositions BF1 and BF2 were produced. The amounts in Table 3 are in parts by weight. The compositions were produced on standard production equipment suitable to compound thermoplastics with temperature control, i.e. twin-screw extruder, Buss kneader or Banbury mixer. Polymers were mixed until homogeneous, then the system was cooled below activation of heat reactive raw materials. Heat reactive raw materials were then mixed into the system until homogeneous. Material was subsequently shape formed while hot into sample shapes that were used for expansion testing procedures.

The following measurements were carried out on the test specimens obtained:

### Test Methods:

### Melt flow index (MFI)

100 ° C, 2.16 kg according to ASTM D1238
The MFI was determined using a capillary rheometer, whereby the granules were first melted in a heatable cylinder with a melting time of 120 seconds, compressed and pressed under a pressure nozzle (weight) through a defined nozzle (2,046mm). The emerging mass of the polymer melt was determined. This was then weighed out on an analytical balance and the MFI was calculated using the appropriate formula (MFI = mass / 10min). The unit for the MFI is therefore given in g / 10min.

### Determination of volume expansion (expansion)

For the carrier materials CAR and CA1, a sample with the dimension of 120 mm x 150 mm x 3 mm was used. For the materials CA2, a sample with the dimension 150 mm x 150 mm x 3 mm was used. On the carrier sample, the in table 4 indicated thermally expandable composition (composition) RF1, RF2, BF1 or BF2 with the dimension 25 mm x 25 mm x 3 mm was added on top. The received specimens were put into an oven with the temperature indicated in table 4 (140 °C, 150 °C respectively) and kept in the oven for the indicated time and then removed.

The expansion was determined in all specimens. The temperatures, time periods and extent of expansion (in % based on the original volume before expansion) are shown in Table 4. "Expansion" indicates the % of expansion based on the original volume before expansion. "Expansion compared to expansion after 20 min (%)" indicates the % of expansion based on the volume expansion value after 20 min. "Expansion compared to CAR" indicates the factor of expansion based on the volume expansion value of the corresponding CAR sample of the same bake time. For example, the value for E1 after a bake time of 5 min is a factor of 2.4, which corresponds to the volume expansion of 83 % for CA1 (E1) divided by the volume expansion of CAR of 35 % (R1).

Volume expansions were quantified for each specimen by measuring the density before and after expansion. The densities were determined according to DIN EN ISO 1183 using the water immersion method (Archimedes principle) in deionized water and a precision balance to measure the mass.

All the compositions R1-R4 and E1-E8 before expansion were tack-free at 23 ° C according to the definition described above and had an MFI of between 1 and 25 g 110min.

**Table 4**

| | **R1** | **E1** | **E2** | **R2** | **E3** | **E4** | **R3** | **E5** | **E6** | **R4** | **E7** | **E8** |
|---|---|---|---|---|---|---|---|---|---|---|---|---|
| **Composition** | **RF1** | | | **RF2** | | | **BF1** | | | **BF2** | | |
| **Carrier material** | **CAR** | **CA1** | **CA2** | **CAR** | **CA1** | **CA2** | **CAR** | **CA1** | **CA2** | **CAR** | **CA1** | **CA2** |
| **Oven Temperature** | **140 °C** | | | **140 °C** | | | **150 °C** | | | **150 °C** | | |
| **Bake Time (min)** | **Expansion (%)** | | | | | | | | | | | |
| 5.0 | 35 | 83 | 79 | 43 | 90 | 116 | 0 | 5 | 22 | 0 | 39 | 18 |
| 7.5 | 54 | 111 | 104 | 83 | 129 | 143 | 12 | 109 | 54 | 12 | 210 | 105 |
| 10.0 | 85 | 112 | 103 | 111 | 136 | 146 | 34 | 256 | 159 | 50 | 668 | 461 |
| 15.0 | 98 | 113 | 105 | 128 | 158 | 154 | 275 | 649 | 542 | 347 | 1290 | 1135 |
| 20.0 | 103 | 118 | 108 | 167 | 173 | 173 | 575 | 834 | 760 | 1113 | 1487 | 1497 |

| | **Expansion compared to expansion after 20 min (%)** | | | | | | | | | | | |
|---|---|---|---|---|---|---|---|---|---|---|---|---|
| 5.0 min | 34 | 71 | 74 | 26 | 52 | 67 | 0 | 1 | 3 | 0 | 3 | 1 |
| 7.5 min | 53 | 94 | 96 | 49 | 74 | 83 | 2 | 13 | 7 | 1 | 14 | 7 |
| 10.0 min | 83 | 95 | 95 | 66 | 79 | 84 | 6 | 31 | 21 | 5 | 45 | 31 |
| 15.0 min | 95 | 96 | 97 | 77 | 91 | 89 | 48 | 78 | 71 | 31 | 87 | 76 |
| 20.0 min | 100 | 100 | 100 | 100 | 100 | 100 | 100 | 100 | 100 | 100 | 100 | 100 |

| *** CAR** | *** Expansion compared to CAR** | | | | | | | | | | | |
|---|---|---|---|---|---|---|---|---|---|---|---|---|
| 5.0 min | | 2.4 | 2.3 | | 2.1 | 2.7 | | high | high | | high | high |
| 7.5 min | | 2.0 | 1.9 | | 1.6 | 1.7 | | 9.1 | 4.5 | | 16.8 | 8.5 |
| 10.0 min | | 1.3 | 1.2 | | 1.2 | 1.3 | | 7.5 | 4.6 | | 13.3 | 9.2 |
| 15.0 min | | 1.2 | 1.1 | | 1.2 | 1.2 | | 2.4 | 2.0 | | 3.7 | 3.3 |
| 20.0 min | | 1.1 | 1.0 | | 1.0 | 1.0 | | 1.5 | 1.3 | | 1.3 | 1.3 |

## Claims

1. A baffle and/or reinforcement element comprising a thermally expandable composition **TEC** and a carrier element, wherein the carrier element consists of a plastic material **MA** with a thermal conductivity of more than 0.6 W/(mK), determined according to ASTM D5470.

2. The baffle and/or reinforcement element according to claim 1, wherein the plastic material **MA** has a specific heat capacity of less than 2500 J/(kgK), preferably less than 2250 J/(kgK), more preferably less than 2000 J/(kgK), determined according to ISO 11357-4.

3. The baffle and/or reinforcement element according to any of the proceeding claims, wherein the plastic material **MA** has a tensile modulus @ 23 °C (ISO 527) of 1 - 20 GPa and/or, preferably and, a tensile strength @ 23 °C (ISO 527) of 30 - 300 MPa and/or, preferably and, a charpy notched impact strength @ 23°C (ISO 179) of 2 - 25 kJ/m².

4. The baffle and/or reinforcement element according to any of the proceeding claims, wherein the plastic material **MA** has a thermal conductivity of more than 0.8 W/(mK), preferably more than 1.0 W/(mK), more preferably more than 1.1 W/(mK), determined according to ASTM D5470.

5. The baffle and/or reinforcement element according to any of the proceeding claims, wherein the plastic material **MA** comprises a polymer selected from the group consisting of polyamides, polyesters, especially polyetylene terephthalates and polybutylene terephthalates, polyketones, polyphenylene ethers, polysulfones and polyethersulfones, preferably polyamides.

6. The baffle and/or reinforcement element according to any of the proceeding claims, wherein the plastic material **MA** has a density determined according to DIN EN ISO 1183 of 0.8 - 1.8 kg/m³, preferably 1.0 - 1.7 kg/m³, more preferably 1.2 - 1.65 kg/m³.

7. The baffle and/or reinforcement element according to any of the proceeding claims, wherein the plastic material **MA** comprises fibers, preferably selected from glass fibers, carbon fibers and aramid fibers, preferably 20 - 50 wt.-%, more preferably 30 - 40 wt.-%, most preferably 32.5 - 37.5 wt.-% fibers, based on the total weight of the material **MA**.

8. The baffle and/or reinforcement element according to any of the proceeding claims, wherein the plastic material **MA** comprises a thermally conductive filler, preferably selected from the group consisting of graphite; carbon black; carbon nanotubes; metallic powders, preferably aluminum powder, copper powder, bronze powder and brass powder; metal oxide, preferably zinc oxide, magnesium oxide, beryllium oxide, zirconium oxide; most preferably selected from graphite and metallic powders.

9. The baffle and/or reinforcement element according to any of the proceeding claims, wherein the thermally expandable composition **TEC** is in direct contact with the carrier element.

10. The baffle and/or reinforcement element, preferably reinforcement element, according to any of the proceeding claims, wherein the thermally expandable composition **TEC** has an expansion rate of 60% - 600%, preferably 100% - 500%, more preferably 150% - 300%, determined as described in the description.

11. The baffle and/or reinforcement element preferably baffle element, according to any of the claims 1 - 9, wherein the thermally expandable composition **TEC** has an expansion rate of 800% - 4000%, preferably 900% - 3000%, more preferably 1000% - 2500%, determined as described in the description.

12. The baffle and/or reinforcement element according to any of the proceeding claims, wherein the thermally expandable composition **TEC** is selected from the group consisting of epoxy resin compositions, polyurethane compositions and compositions containing at least one polymer **P** that is cross-linkable by peroxide.

13. The baffle and/or reinforcement element, preferably baffle element, according to any of the proceeding claims, wherein the thermally expandable composition **TEC** comprises:
- at least one polymer **P**, cross-linkable by peroxide, preferably between 30 and 80 wt.-%, based on the total weight of the composition, and;
- preferably at least one acrylate **A**, preferably between 0.1 and 5 wt.-%, based on the total weight of the composition, and;
- at least one peroxide **PE** and;
- at least one blowing agent **BA**, preferably selected from azodicarbonamide and 4,4'-oxybis(benzenesulphonylhydrazide, preferably between 3 and 15 wt.-%, based on the total weight of the composition.

14. The baffle and/or reinforcement element, preferably reinforcement element, according to claim 1 - 12, wherein the thermally expandable composition **TEC** is a one-component thermosetting epoxy resin composition comprising:
- at least one epoxy resin A having on average more than one epoxide group per molecule, preferably a solid epoxy resin, the fraction of the epoxy resin A preferably being from 30 - 90 wt.-%, based on the total weight of the one-component thermosetting epoxy resin composition; and
- at least one latent hardener B for epoxy resins; and
- preferably at least one accelerator C for epoxy resins; and
- at least one toughness improver D, the fraction of toughness improver D preferably being from 1 - 10 wt.-%, based on the total weight of the one-component thermosetting epoxy resin composition, and;
- at least one blowing agent **BA**, preferably selected from azodicarbonamide and 4,4'-oxybis(benzenesulphonylhydrazide, preferably between 0.1 and 5 wt.-%, based on the total weight of the one-component thermosetting epoxy resin composition.

15. The baffle and/or reinforcement element according to any of the proceeding claims, wherein the carrier element has a weight of more than 0.3 kg, preferably more than 0.6 kg, most preferably more than 1 kg.

16. A method for baffling or reinforcing structural components comprising the steps
i) placing a baffle and/or reinforcement element according to claim 1 - 15 in a cavity of a structural component, preferably in bodies and / or frames of means of transport and transportation;
ii) heating the baffle and/or reinforcement element to a temperature from 120 °C to 220 °C, preferably from 140 °C to 200 °C, preferably for 10 to 60 min.

17. Use of a carrier element, wherein the carrier element consists of a plastic material **MA** with a thermal conductivity of more than 0.6 W/(mK), determined according to ASTM D5470, as described in any of the claims 1 - 15, for increasing the volume expansion of a thermally expandable composition **TEC** as mentioned in any of the claims 1-15 in direct contact with the carrier element, compared to a carrier element consisting of a plastic material **MA** with a thermal conductivity of less than 0.6 W/(mK), wherein the volume expansion is determined after curing the thermally expandable composition **TEC** at a temperature of 140 - 150 °C for 5 - 20 min, preferably as described in the description.

18. Use according to claim 17, wherein the volume expansion is determined after curing the thermally expandable composition **TEC**, preferably as described in claim 14, at a temperature of 140 °C for 7.5 min, preferably as described in the description, and the volume expansion is more than 30 %, preferably more than 50 %, compared to a carrier element consisting of a plastic material **MA** with a thermal conductivity of less than 0.6 W/(mK); and/or, preferably and, wherein the volume expansion is determined after curing the thermally expandable composition **TEC** at a temperature of 140 °C for 10 min, preferably as described in the description, and the volume expansion is more than 10 %, preferably more than 20 %, compared to a carrier element consisting of a plastic material **MA** with a thermal conductivity of less than 0.6 W/(mK).

19. Use according to claim 17, wherein the volume expansion is determined after curing the thermally expandable composition **TEC**, preferably as described in claim 13, at a temperature of 150 °C for 10 min, preferably as described in the description, and the volume expansion is more than 300 %, preferably more than 450 %, more preferably more than 700 %, compared to a carrier element consisting of a plastic material **MA** with a thermal conductivity of less than 0.6 W/(mK); and/or, preferably and, wherein the volume expansion is determined after curing the thermally expandable composition **TEC** at a temperature of 140 °C for 15 min, preferably as described in the description, and the volume expansion is more than 150 %, preferably more than 200 %, more preferably more than 230 %, compared to a carrier element consisting of a plastic material **MA** with a thermal conductivity of less than 0.6 W/(mK).
